# EUROPÄISCHE PATENTANMELDUNG

(11) **EP 1 681 578 A1**
(43) Veröffentlichungstag der Anmeldung: **19.07.2006**
(21) Anmeldenummer: 05000731.9
(22) Anmeldetag: 14.01.2005
(51) Int. Cl.: G01S 7/40, G01S 13/34, G01S 13/75, G01S 13/82, G01S 7/03

(54) **Rauschunterdrückung für Radarsystem**

(71) Anmelder: SIEMENS AKTIENGESELLSCHAFT, 80333 München (DE)
(72) Erfinder: Baumgartner, Josef, 1160 Wien (AT); Gila, Janos, Dr., 2340 Mödling (AT); Konrad, Wolfgang, Dr., 2340 Mödling (AT)

(57) **Zusammenfassung**

Die Erfindung betrifft ein Dauerstrich-Radarsystem mit Mitteln zur Rauschunterdrückung von empfangenen Radarsignalen. Das Radarsystem verfügt über einen Modulator zur Erzeugung eines Korrektursignals, das dem Trägerleckage gegenphasig überlagert werden kann. Somit kann das Übersprechen zwischen Sendekanal und Empfangskanal und das damit verbundene Übersprechrauschen effektiv minimiert werden. Alternativ verfügt das Dauerstrich-Radarsystem über einen regelbaren Phasenschieber, der mittels eines Kalibriermoduls zur Phasenverschiebung eines einem Mischer zugeführten Sendesignals ausgebildet ist. Vorzugsweise werden die dem Mischer zugeführten Sende- und Empfangssignale um 90° zueinander phasenverschoben, so dass der Anteil des aufgrund Übersprechens hervorgerufenen AM-Rauschens effektiv minimiert werden kann.

## Beschreibung

Die Erfindung betrifft ein Dauerstrich-Radarsystem mit Mitteln zur Rauschunterdrückung insbesondere zur Lokalisierung eines mobilen Bedien- und Beobachtungsgeräts.

Radarsysteme eignen sich zur berührungslosen Lokalisierung und Abstandsbestimmung von Objekten. Unter einer Vielzahl verschiedener Radarsysteme ermöglicht z.B. ein Dauerstrich-Radarsystem, welches auch als Frequency Modulated Continous Wave (FMCW) Radar bezeichnet wird, eine zuverlässige Abstandsbestimmung zwischen Objekten, die auch z.B. nur gering voneinander entfernt sind. Hierbei kommt typischerweise keine gepulste, sondern kontinuierliche, d.h. continuous wave (CW) Radarstrahlung zum Einsatz.

Beim frequenzmodulierten Dauerstrich-Radarsystem unterliegt die Frequenz der ausgesendeten Radarsignale einer periodischen Modulation, wodurch ausgesendete und von einem Objekt reflektierte Radarsignale beim Wiedereintreffen in das Radarsystem eine Frequenzverschiebung im Vergleich zu den gesendeten Radarsignalen aufweisen, die einem Laufzeitunterschied entspricht. Dieser Laufzeitunterschied gibt den zweifachen Abstand zwischen dem Sende- und Empfangsmodul und dem reflektierenden Objekt wieder.

Zur Lokalisierung oder Entfernungsbestimmung des reflektierenden Objekts werden empfangene Radarsignale im Empfangsmodul typischerweise einer spektralen Analyse unterzogen. Beispielsweise geben einzelne Peaks oder Spitzen im Leistungsspektrum der Frequenzverschiebung direkt Aufschluss über die Entfernung zwischen Sende- und Empfangsmodul und dem reflektierenden Objekt. So entsprechen z.B. große Frequenzverschiebungen großen Laufzeitunterschieden der Radarsignale und somit großen Entfernungen, während kleine Frequenzverschiebungen kleinen Laufzeitunterschieden und somit kleinen Entfernungen entsprechen.

Ein Transponder ist typischerweise in der Lage ein moduliertes Funkantwortsignal in Reaktion auf ein Abfrage-oder Sendesignal zu senden. Diese Modulation liegt typischerweise im Bereich einiger kHz bis MHz und wird auch als Subträgersignal oder Subträgermodulation bezeichnet. Ist der Empfänger des Radarsystems auf die Modulation des Funkantwortsignals abgestimmt, so können mit Hilfe geeigneter Filtermethoden die von einem Transponder gesendeten Funkantwortsignale deutlich von Hintergrund- und sonstigen Störsignalen getrennt und zur Abstandsbestimmung ausgewertet werden. Transponder können als passive oder auch als aktive, d.h. leistungsverstärkende Transponder, ausgebildet sein.

Ein Sende- und Empfangsmodul des Radarsystems ist zum einen zum Senden von Radarsignalen oder Abfragesignalen und zum anderen zum Empfangen reflektierter Funkantwortsignale ausgebildet. Im Vergleich zu den ausgesendeten Abfragesignalen weisen die empfangen Funkantwortsignale eine deutlich geringere Leistung auf. Zudem wird ein Teil des gesendeten Trägersignals direkt von einer Sende- und/oder Empfangsantenne, oder durch eine endliche LO-RF Isolation des Mischer wieder an den Eingangs-Port des Mischers gelangen. Dieses, auf einem Übersprechen basierende Signal, welches auch als Leakage Signals bezeichnet wird mischt sich auch mit dem Lokaloszillatorsignal, wobei durch die Mischung und insbesondere das AM-Rauschen, dessen spektraler Anteil bis hin zu einigen MHz betragen kann, ins Basisband gemischt wird. Damit unterliegen die von den Transpondern modulierten und reflektierten Funkantwortsignale nicht nur einem thermischen Rauschen, sondern auch einem zusätzlichen, auf Übersprechen basierenden Rauschen. Dieses Leakage oder Leckage Signal kann derart ansteigen, dass das dadurch hervorgerufene Rauschen, das thermische Rauschen übertreffen kann.

Dieses Rauschen beeinträchtigt in hohen Maße die Auswertung empfangener Funkantwortsignale zur Abstandsbestimmung zwischen dem Sende- und Empfangsmodul und einem Transponder.

Zur Signalauswertung werden die empfangenen Funkantwortsignale mit dem Sendesignal, welches gleichbedeutend zum Lokaloszillatorsignal des Mischer ist, gemischt und somit auf eine Subträgerfrequenz umgesetzt. Die Signalauswertung erfolgt schließlich mit Hilfe des umgesetzten Subträgersignals. Die Rauschanteile des Subträgersignals sind zum einen durch thermisches Rauschen und zum anderen durch das AM-Rauschen des Lokaloszillators bedingt. Der hoher Rauschanteil im Basisband und damit auch im spektralen Bereich des Subträgersignals wirkt sich nachteilig auf die Sensitivität und die Reichweite der vom Radarsystem durchzuführenden Abstandsmessung aus.
Der Erfindung liegt somit die Aufgabe zu Grunde ein Dauerstrich-Radarsystem so weiter zugestalten, dass ein durch den Mischprozess und durch Übersprechen der Sende- und Empfangskanäle des Radarsystems verursachter Rauschanteil empfangener Funkantwortsignale minimiert wird.

Die Aufgabe wird mit den in Patentanspruch 1 und 4 angegebenen Radarsystemen, dem in Anspruch 5 angegebenen mobilen Bedien- und Beobachtungsgerät sowie mit dem in Anspruch 10 angegebenen HMI System gelöst. Weitere vorteilhafte Ausführungen der Erfindung sind in den Unteransprüchen angegeben.

Die Erfindung betrifft ein Dauerstrich-Radarsystem mit einer Sende- und Empfangseinheit, einem Mischer, einem Kalibriermodul und einem regelbaren Phasenschieber. Die Sende- und Empfangseinheit ist zum Senden eines frequenzmodulierten Sendesignals und zum Empfangen eines Funkantwortsignals ausgebildet. Das Funkantwortsignal wird typischerweise von einem Transponder in Reaktion auf ein Sendesignal ausgesendet. Typischerweise weist das Funkantwortsignal im Vergleich zum Sendesignal eine Modulation auf, die mit Hilfe des Transponders dem Funkantwortsignal aufgeprägt wird. Gegebenenfalls ist der Transponder sogar als aktiver, d.h. Signal verstärkender, Transponder ausgebildet. Vorzugsweise verfügt die Sende- und Empfangseinheit über eine Sende- und Empfangsantenne, die sowohl die frequenzmodulierten Sende- oder Abfragesignale als auch die von Transpondern reflektierten Funkantwortsignale sendet bzw. empfängt.

Die Sende- und Empfangsantenne zur Abgabe eines Empfangssignals an den Mischer in Antwort auf den Empfang des Funkantwortsignals ausgebildet.
Der Mischer des Radarsystems dient dem Mischen des Empfangssignals mit dem Sendesignal zur Erzeugung eines Subträgersignals. Somit wird das hochfrequente Empfangssignal auf eine Subträgerfrequenz umgesetzt, die der Frequenz der vom Transponder aufgeprägten Modulation entspricht. Die Frequenz der Funkantwortsignale bzw. Sendesignale oder Empfangssignale liegt typischerweise im Bereich einiger GHz, z.B. im ISM Band, während die Modulationsfrequenz des Transponders, bzw. die Frequenz des Subträgersignals im Bereich einiger KHz bis MHz liegt.

Vorzugsweise ist der Empfänger zur reellen Signalverarbeitung ausgebildet. Somit wird auf eine komplexe I/Q Signalverarbeitung verzichtet, wodurch die Bauteilgröße des Empfängers und weiterer Signal verarbeitender Komponenten kosteneinsparend reduziert werden kann. Somit können die Komponenten im Wesentlichen auf einen Mischer und einen Basisbandverstärker minimiert werden.

Das Kalibriermodul ermöglicht eine Messung des Ausgangssignals des Mischers. Insbesondere dient das Kalibriermodul der Messung eines DC- Anteils des Ausgangssignals. Typischerweise ist die Größe dieses DC Anteils von der Phasenverschiebung zwischen dem Empfangssignal und dem Sendesignal abhängig. Die Phasenlage des Empfangsignals ist im Wesentlichen durch das Leckage Signal bestimmt, welches im allgemeinen größer als das Funkantwortsignal ist. Durch Messen des DC Anteils des Empfangssignals lässt sich somit ein Phasenkontrollsignal bestimmen.

Das Phasenkontrollsignal dient schließlich zur Regelung des Phasenschiebers und wird in diesen zur Regelung der Phase des dem Mischer zugeführten Sendesignals eingekoppelt Der Phasenschieber ermöglicht somit eine Einstellung der Phasenverschiebung zwischen dem ausgekoppelten Anteil des Sendesignals, welches dem Mischer zugeführt wird, und dem Empfangssignal.

Bei einer weiteren Ausführungsform der Erfindung sind der Phasenschieber und das Kalibriermodul zur Rauschunterdrückung des Subträgersignals mittels Einstellung der Phasenlage zwischen dem, dem Mischer zugeführten, Sendesignal und dem Empfangssignal ausgebildet. Vorzugsweise ermöglicht der Phasenschieber eine Veränderung der Phase des dem Mischer zugeführten Anteils des Sendesignals. Diese Phasenverschiebung wird hierbei in Abhängigkeit vom DC-Anteil des Ausgangssignals des Mischers eingestellt. Der Mischer, das Kalibriermodul und der Phasenschieber bilden somit vorzugsweise einen Regelkreis zur AM-Rauschunterdrückung des Subträgersignals.

Hierzu verfügt das Kalibriermodul vorzugsweise über Mittel zur Messwerterfassung und Messwertspeicherung. Beispielsweise kann das Kalibriermodul mit Hilfe einer Messwerterfassung einen aktuellen DC-Anteil des Ausgangssignals des Mischers ermitteln und mit einem gespeicherten, vorgegebenen DC-Anteil vergleichen. Auf der Basis dieses Vergleichs kann eine Phasenverschiebung des dem Mischer zugeführten Anteils des Sendesignals vorgenommen werden. Dieser Prozess kann iterativ solange wiederholt werden, bis die, für AM-Rauschunterdrückung optimale Einstellung (nämlich 90°) erreicht wird. Diese Phaseneinstellung minimiert das breitbandige AM-Rauschen am Ausgang des Mischers. Das heißt, dass der AM-Rauschanteil auch auf der Subträgerfrequenz, also auch im Nutzband, minimiert wird.

Die Phasenanpassung für AM-Rauschunterdrückung des Subträgersignals kann kontinuierlich als auch in vordefinierten Zeitintervallen durchgeführt werden. Mit Hilfe dieser aktiven Phasenanpassung können Temperatureinflüsse sowie Alterungsprozesse, die sich auf die Phasenverschiebung zwischen Empfangssignal und Sendesignal auswirken können, effektiv kompensiert werden. Der durch den Mischer, das Kalibriermodul und den Phasenschieber realisierte Regelkreis dient somit einer adaptiven Rauschunterdrückung, die z. B. vor Inbetriebnahme des Radarsystems als auch während des Betriebs des Radarsystems vorgenommen werden kann.

Bei einer weiteren Ausführungsform sind der Phasenschieber und das Kalibriermodul dazu ausgebildet, eine Phasenverschiebung im Bereich um 90° zwischen dem Empfangssignal und damit im wesentlichen zwischen dem Leckage Anteil des Empfangssignals und dem, dem Mischer zugeführten, empfangenen Sendesignal einzustellen. Beträgt die Phasenverschiebung der beiden dem Mischer zugeführten Signale genau 90°, so weist das vom Mischer erzeugte Subträgersignal eine minimale Rauschamplitude auf. Auf diese Art und Weise wird ein mögliches Amplitudenrauschen des Subträgersignals auf den Anteil thermischen Rauschens minimiert.

Die Phasenverschiebung um 90° zwischen den dem Mischer zugeführten Signalen erlaubt somit eine effektive Kompensation des Rauschanteils, der durch das Übersprechen zwischen Sendeund Empfangskanal des Dauerstrich-Radarsystems entsteht.

In einem weiteren Aspekt betrifft die Erfindung ein Dauerstrich-Radarsystem zur Lokalisierung eines mobilen Bedienund Beobachtungsgeräts für die Automatisierungskomponenten einer technischen Anlage. Das Dauerstrich-Radarsystem verfügt über eine Sende- und Empfangseinheit, die zum Senden des frequenzmodulierten Sendesignals und zum Empfangen eines, typischerweise von einem Transponder gesendeten, Funkantwortsignals ausgebildet ist. Des Weiteren hat das Dauerstrich-Radarsystem einen Mischer zum Mischen eines empfangenen Funkantwortsignals mit dem Sendesignal zur Erzeugung eines Subträgersignals und hat ferner Mittel zur Rauschunterdrückung des Subträgersignals.

Als technische Anlage kommen hier alle Arten von technischen Geräten und Systemen sowohl in Einzelanordnung als auch in datentechnischer Vernetzung z.B. über einen Feldbus in Frage. Bei industriellen Anwendungen fallen darunter einzelne Betriebsmittel, z.B. Antriebe und Bearbeitungsmaschinen. Eine technische Anlage kann aber auch eine Produktionsanlage sein, bei der mit lokal verteilten Betriebsmitteln ein gesamter technischer Prozess betrieben wird, z.B. eine chemische Anlage oder Fertigungsstraße. Technische Anlagen werden mit speziellen digitalen Datenverarbeitungssystemen, auch Automatisierungskomponenten genannt, gesteuert und bedient. In einem solchen System sind einerseits zur direkten Steuerung der technischen Anlage dienende Komponenten vorhanden, d.h. speicherprogrammierbare Steuerungen SPS, auch als "PLC - Programmable Logic Controller" bezeichnet.

Das mobile Bedien- und Beobachtungsgerät stellt eine Schnittstelle zwischen einer Steuerung einer Anlage und dem Bedienpersonal dar. Derartige Geräte, die eine interaktive Mensch-Maschine Schnittstelle realisieren werden auch als Geräte zum "Bedienen- und Beobachten", abgekürzt "B+B", oder als HMI Geräte, d.h. Human Machine Interface, bezeichnet.

In einem weiteren Aspekt betrifft die Erfindung ein mobiles Bedien- und Beobachtungsgerät für die Automatisierungskomponenten einer technischen Anlage mit einem Dauerstrich-Radarsystem zur Lokalisierung des mobilen Bedien- und Beobachtungsgeräts. Hierbei verfügt das Dauerstrich-Radarsystem über eine Sende- und Empfangseinheit, die zum Senden eines frequenzmodulierten Sendesignals und zum Empfangen eines Funkantwortsignals ausgebildet ist. Ferner verfügt das Dauerstrich-Radarsystem über einen Mischer zum Mischen des empfangenen Funkantwortsignals mit dem Sendesignal zur Erzeugung eines Subträgersignals. Schließlich hat das Dauerstrich-Radarsystem Mittel zur Rauschunterdrückung des Subträgersignals. Die Mittel zur Rauschunterdrückung wirken sich entweder auf das dem Mischer zugeführte Sendesignal oder aber auf das Empfangssignal bzw. das Funkantwortsignal aus. Alternativ können auch beide dem Mischer zugeführten Signale zur Rauschunterdrückung verändert werden.

Bei einer weiteren Ausführungsform der Erfindung sind die Mittel zur Rauschunterdrückung zur Unterdrückung des Amplitudenrauschanteils des Ausgangssignals des Mischers ausgebildet. Da das Amplitudenrauschen insbesondere durch ein Leckage Signal am RF-Eingang des Mischers, durch so genanntes reziprokes Mischen, hervorgerufen wird, kann somit eine effektive Rauschunterdrückung durch Minimieren des Leckage Anteils des Empfangssignals erreicht werden.

Die Unterdrückung des Leckage Anteiles ermöglicht eine Kompensation der AM-Rauschanteile, die durch ein Übersprechen zwischen Sende- und Empfangskanal des Dauerstrich-Radarsystems entstehen würden. Hierzu wirken die Mittel zur Rauschunterdrückung vorzugsweise auf den Eingang des Mischers ein. Die Kompensation wirkt sich so aus, dass der durch Übersprechen erzeugte Anteil des Leckage Signalseffektiv kompensiert wird.

Bei einer weiteren Ausführungsform verfügt die Sende- und Empfangseinheit des mobilen Bedien- und Beobachtungsgeräts über ein Treibermodul und die Mittel zur Rauschunterdrückung sind mit Hilfe eines HF-Addierers und mit Hilfe eines durch das Treibermodul regelbaren Quadratur-Modulator ausgebildet. Der Addierer ermöglicht eine Addition des Leckage Signals mit einem Korrektursignal, welches vom Quadratur-Modulator erzeugt wird. Vorzugweise wird ein Teil des Sendesignals in den Quadratur-Modulator eingespeist, der in Antwort auf das eingekoppelte Sendesignal und durch Ansteuerung durch das Treibermodul zur Abgabe des Korrektursignals an den Addierer ausgebildet ist.

Vorzugsweise entspricht das vom Quadratur-Modulator erzeugte Korrektursignal dem Anteil des Leckage Signals am Empfangssignal, welcher durch Übersprechen zwischen Sende- und Empfangskanal entsteht. Der Quadratur-Modulator wird mit Hilfe des Treibermoduls derart geregelt, dass das Korrektursignal gegenphasig dem durch Übersprechen erzeugten Anteil des Empfangssignals mit Hilfe des Addierers überlagert wird. Eine derartige gegenphasige Addition ermöglicht eine effektive Minimierung des Übersprechens zwischen dem Sendekanal und dem Empfangskanal des Radarsystems. Somit kann der durch Übersprechen verursachte Rauschanteil des Subträgersignals effektiv beseitigt oder zumindest minimiert werden, da Leckage Anteil selbst und damit auch inhärent das Rauschen unterdrückt werden.

Bei einer weiteren bevorzugten Ausführungsform der Erfindung ist das Treibermodul in Antwort auf die Leistung des Ausgangssignals des Addierers zur digitalen Signalverarbeitung und zur Regelung der Amplitude und Phase des Korrektursignals mit Hilfe des Quadratur-Modulators ausgebildet. Hierzu ist das Treibermodul an eine Messanordnung gekoppelt, die an den Ausgang des Addierers angeschlossen ist. Die Messanordnung ermöglicht eine HF-Leistungsmessung und damit die Minimierung das Summensignal am Ausgang der Addierer.

Das Treibermodul wertet die durch die Messanordnung aufgenommenen Signale derart aus und berechnet eine Ansteuersequenz für den Quadratur-Modulator, so dass das vom Quadratur-Modulator erzeugte Korrektursignal zur Kompensation des Kanalübersprechens mit Hilfe des Addierers überlagert werden kann. Das Treibermodul ist z. B. als Mikro-Controller ausgebildet und verfügt daher über Mittel zur digitalen Signalverarbeitung. Typischerweise sind daher der Quadratur-Modulator und das Treibermodul über einen Digital-Analog-Wandler miteinander gekoppelt.

Bei einer weiteren Ausführungsform der Erfindung verfügen die Mittel zur Rauschunterdrückung über ein Kalibrierungsmodul zur Messung des DC- Anteils des Ausgangssignals des Mischers und zur Erzeugung eines Phasenkontrollsignals in Abhängigkeit vom gemessenen DC-Anteil. Zudem verfügen die Mittel zur Rauschunterdrückung über einen regelbaren Phasenschieber, der zur Regelung der Phase des dem Mischer zugeführten Sendesignals ausgebildet ist. Der Phasenschieber regelt die Phase des Sendesignals mittels des Phasenkontrollsignals, das vom Kalibriermodul erzeugt wird. Das Kalibriermodul, der Mischer und der Phasenschieber bilden somit einen aktiven Regelkreis zur Minimierung der Rauschamplitude des Subträgersignals. Dieser Regelkreis kann alternativ oder aber auch zusätzlich zum Quadratur-Modulator und dem Addierer im Radarsystem implementiert werden.

In einem weiteren Aspekt betrifft die Erfindung ein HMI System mit zumindest einem mobilen Bedien- und Beobachtungsgerät für die Automatisierungskomponenten einer technischen Anlage und mit einem Dauerstrich-Radarsystem zur Lokalisierung des mobilen Bedien- und Beobachtungsgeräts. Das Dauerstrich-Radarsystem verfügt hierbei über eine Sende- und Empfangseinheit, die zum Senden eines Sendesignals und zum Empfangen eines Funkantwortsignals ausgebildet ist. Ferner verfügt das Dauerstrich-Radarsystem über einen Mischer zum Mischen des empfangenen Funkantwortsignals mit dem Sendesignal zur Erzeugung eines Subträgersignals und über Mittel zur Rauschunterdrückung des Subträgersignals.

Der Begriff HMI Gerät ist ein Oberbegriff und umfasst alle zu dieser Gruppe von Geräten gehörigen Komponenten. Als ein Beispiel sollen "Operator Panels ", auch als "Bedienpanels" bzw. kurz als "OP" bezeichnet, genannt werden. HMI Geräte dienen in einer vernetzten Automatisierung als Hilfsmittel für Bedienpersonal, um Prozessdaten der zu steuernden technischen Anlage anzeigen oder bedienen zu können. Diese Funktion wird mit "Supervisor Control and Data Akquisition"(SCADA) bezeichnet. Hierzu ist das HMI Gerät in der Regel hardwaremäßig speziell aufgebaut, d.h. es verfügt z.B. über einen Touchscreen und ist gegen Umwelteinflüsse besonders abgeschirmt. Weiterhin wird darin eine spezielle Software ausgeführt. Diese stellt Funktionen bereit, womit Komfort, Qualität und Sicherheit einer Bedienung durch eine Bedienperson verbessert. So können über HMI Geräte z.B. interaktive Prozessabbilder der zu bedienenden technischen Anlage visualisiert, bedient, projektiert und generiert werden. Hiermit ist einerseits eine selektive Anzeige von Reaktionen der technischen Anlage möglich, meist in Form von Messwerten und Meldungen. Andererseits wird es durch gezielte Vorgabe von Bedienhandlungen und Dateneingaben ermöglicht, die technische Anlage in gewünschte Zustände zu überführen.

Bevorzugte Ausführungsformen der Erfindung werden nachfolgend anhand der Zeichnungen näher erläutert. Es zeigen:
- FIG 1: ein Blockdiagramm eines Radargeräts mit Rauschunterdrückung mittels Phasenschieber,
- FIG 2: ein Blockdiagramm eines Radargeräts mit Rauschunterdrückung mittels Quadratur-Modulator und Addierer,
- FIG 3: ein detailliertes Blockdiagramm des Kalibriermoduls des Radargeräts,
- FIG 4: ein Blockdiagramm eines HMI Systems.

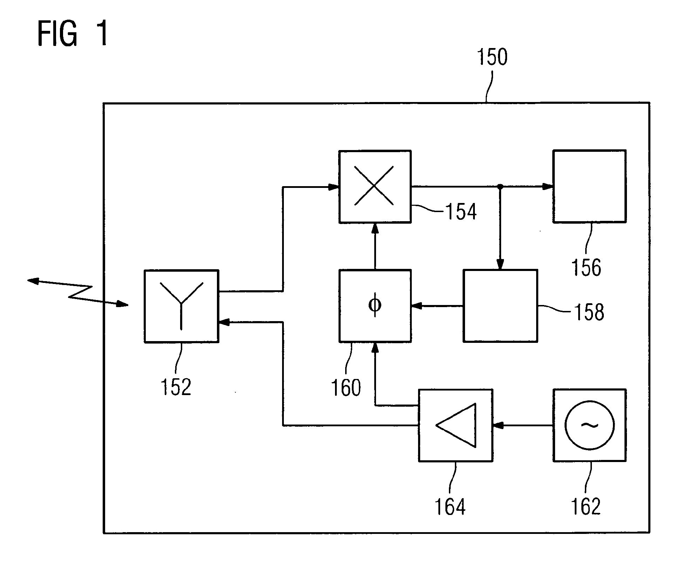

FIG 1 zeigt ein Blockdiagramm eines Radargeräts 150, welches über Mittel zur Rauschunterdrückung eines empfangenen Funkantwortsignals verfügt. Das Radargerät 150 hat eine Sendeund Empfangsantenne 152, einen Mischer 154, ein Datenverarbeitungsmodul 156, ein Kalibriermodul 158, einen Phasenschieber 160, einen spannungskontrollierten Oszillator 162 sowie einen Verstärker 164. Der spannungskontrollierte Oszillator, der auch als Voltage Controlled Oscillator (VCO) bezeichnet wird, erzeugt ein Sendesignal mit einer variierenden, typischerweise linear variierenden Trägerfrequenz.

Mit Hilfe des Verstärkers 164 wird dieses Trägersignal verstärkt und in die Sende- und Empfangsantenne 152 eingekoppelt. Diese sendet das vom Verstärker 164 eingespeiste Signal als Abfragesignal an verschiedene Transpondervorrichtungen, die hier nicht explizit gezeigt sind. Ein Transponder ist zum Empfangen des gesendeten Abfragesignals und zum Modulieren des empfangenen Abfragesignals mit einer Subträgerfrequenz ausgebildet. Das modulierte Sendesignal wird dann vom Transponder als Funkantwortsignal an das Radargerät 150 zurückgesendet. Die Sende- und Empfangsantenne 152 empfängt die von den Transpondern gesendeten Funkantwortsignale und übermittelt diese an den Mischer 154 in Form von Empfangssignalen.

Dem Mischer 154, der vorzugsweise zur reellen Signalverarbeitung ausgebildet ist, wird zusätzlich zum empfangenen Funkantwortsignal noch ein vom Sendesignal ausgekoppelter Anteil über den Phasenschieber 160 zugeführt und dient als Lokaloszillatorsignal, dessen Phase variabel einstellbar ist. Typischerweise ist die Leistung des Sendesignals um ein Vielfaches höher als die Leistung des empfangenen und mit der Subträgerfrequenz modulierten Funkantwortsignals.

Mit Hilfe des Mischers 154 wird das empfangene Empfangssignal, welches das Funkantwortsignal enthält in ein Subträgersignal umgesetzt. Die Frequenz dieses Subträgersignals entspricht hierbei der Modulationsfrequenz der vom Transponder dem Funkantwortsignal aufgeprägten Modulation. Typischerweise ist die Frequenz des Subträgersignals im Bereich einiger KHz bis MHz, während die Frequenz der Sende- und Funkantwortsignale im Bereich einiger GHz liegt.

Das vom Mischer 154 erzeugte Subträgersignal wird dem Datenverarbeitungsmodul 156 zugeführt, das eine Datenauswertung zur Abstandsbestimmung zwischen dem Radargerät 150 und einem Transponder vornimmt. Die Abstandsinformation wird vorzugsweise durch eine spektrale Analyse des generierten Subträgersignals gewonnen. Der Abstand zwischen dem Radarsystem 150 und einem Transponder spiegelt sich in einem Frequenzunterschied zwischen dem Sendesignal und dem empfangenen Funkantwortsignal wieder, der bei einem Dauerstrich-Radarsystem einem Laufzeitunterschied und somit einer Entfernung entspricht.

Die Sende- und Empfangskanäle des Radargeräts 150 sind aufgrund einer gemeinsamen Sende- und Empfangsantenne 152 als auch aufgrund einer Kopplung des Verstärkers 164 und des Mischers 154 als auch über diverse Signalleckwege nicht vollständig voneinander isoliert. Das bedeutet, dass es unweigerlich zu einem nicht vernachlässigbaren Übersprechen zwischen Sende- und Empfangskanal des Radargeräts 150 kommt. Durch diese unvermeidbare Kopplung erhöht sich die Rauschamplitude des vom Mischer 154 erzeugten Subträgersignals. Demzufolge beruht das Rauschen zum einen auf thermischen Rauschen und zum anderen auf einem Rauschen aufgrund der Kopplung zwischen Sende- und Empfangskanal des Radargeräts 150.

Mit Hilfe des Kalibriermoduls 158 und des Phasenschiebers soll eine möglichst genaue Phaseneinstellung zwischen den, dem Mischer 154 zugeführten, Signalen, dem Lokaloszillator Signal und dem Leckage Anteil des Empfangssignals, realisiert werden. Der Phasenschieber 160 ermöglicht eine Veränderung der Phase des vom Verstärker 164 ausgekoppelten Anteils des Sendesignals, der dem Mischer 154 zuzuführen ist. Somit kann die relative Phasenlage zwischen dem, am RF- Port des Mischers anliegenden Leckage Signal und dem, vom Verstärker 164 ausgekoppelten, Sendesignal beliebig eingestellt werden. Vorzugsweise wird die Phase des vom Verstärker 164 ausgekoppelten Sendesignals derart eingestellt, dass die beiden dem Mischer 154 zugeführten Signale um 90° phasenverschoben sind.

In einer solchen Konfiguration werden durch den vom Mischer 154 durchgeführten Mischprozess die Rauschanteile des Subträgersignals weitestgehend eliminiert. Im Idealfall kann somit eine vollständige Kompensation des durch Kopplung hervorgerufenen Rauschanteils realisiert werden, so dass der im Subträgersignal verbleibende Rauschanteil lediglich auf thermisches Rauschen zurückzuführen ist.

Das Kalibriermodul 158 ist an den Ausgang des Mischers 154 gekoppelt und ermöglicht eine Messung des vom Mischer 154 generierten DC-Signals. Insbesondere ermöglicht das Kalibriermodul 158 einen Vergleich zwischen vordefinierten oder voreingestellten Referenzwerten und Messwerten, die vom Mischer 154 erzeugt werden. In Abhängigkeit vom gemessenen DC-Ausgangssignal des Mischers 154 regelt das Kalibriermodul 158 mit Hilfe des Phasenschiebers 160 die Phase des dem Mischer 154 zuzuführenden Anteils des Sendesignals. Die daraus resultierende Änderung des DC-Anteils kann wiederum vom Kalibriermodul 158 gemessen und mit dem vorherigen Wert verglichen werden. Der Mischer 154, das Kalibriermodul 158 sowie der Phasenschieber 160 entsprechen somit einem Regelkreis zur iterativen Rauschunterdrückung des Subträgersignals.

Dieser Regelkreis kann entweder im Dauerbetrieb oder aber auch in vordefinierten Zeitintervallen betrieben werden. Die Genauigkeit der Phasenregulierung durch das Kalibriermodul 158 und dem Phasenschieber 160 richtet sich hierbei nach den Anforderungen des Radarsystems. Das Kalibriermodul 158 und der Phasenschieber 160 können generell ohne hohen Platzaufwand und ohne erhebliche Kosten in ein bestehendes Dauerstrich-Radarsystem eingefügt werden. Mit Hilfe der erfindungsgemäßen Rauschunterdrückung kann somit die Sensitivität und die Reichweite des Radarsystems in hohem Maße gesteigert werden.

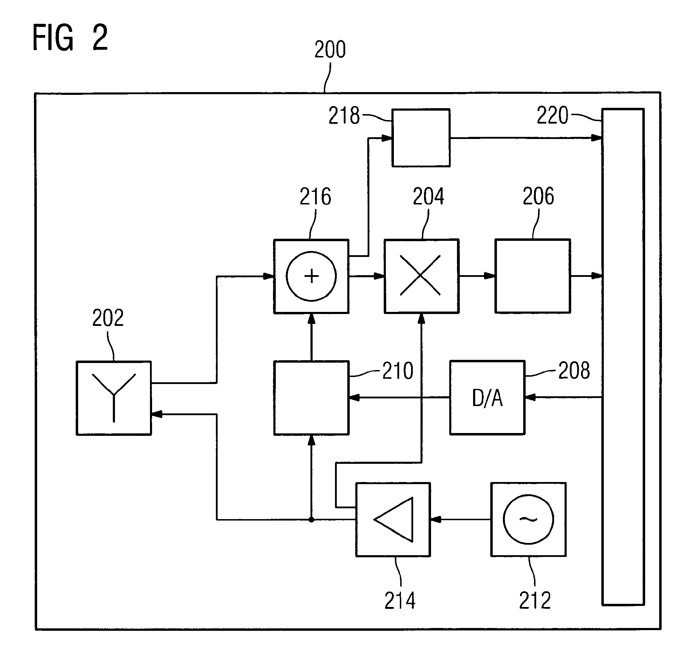

FIG 2 zeigt ein Blockdiagramm eines Radargeräts 200, bei dem die Mittel zur Rauschunterdrückung mit Hilfe eines Addierers 216, einer Leistungsmessanordnung 218, eines Modulators 210 und einem digitalen Treibermodul 220 realisiert sind. Ebenso wie das in Figur 1 dargestellte Radarsystem verfügt das Radarsystem 200 über eine Sende- und Empfangsantenne 202, einen Mischer 204, ein Datenverarbeitungsmodul 206, einen spannungskontrollierten Oszillator 212 und einen Verstärker 214. Hier ist jedoch der Ausgang des Verstärkers 214 nicht nur an den Mischer, sondern auch über den Modulator 210 an den Addierer 216 gekoppelt. Der Regelkreis zur Rauschunterdrückung besteht somit aus dem Addierer 216, einer Messanordnung 218, die z.B. in Form einer HF-Pegelmessanordnung realisierbar ist, dem Treibermodul 220, dem Digital-/Analog-Wandler 208 und dem Modulator 210, der typischerweise als Quadratur-Modulator ausgebildet ist.

Der Quadratur-Modulator 210 wird über den D/A-Wandler 208 vom Treibermodul zur Erzeugung eines Korrektursignals angesteuert. Ferner wird ein Teil des vom Verstärker 214 generierten Sendesignals in den Quadratur-Modulator 210 eingespeist. Basierend auf dem in dem Quadratur-Modulator 210 eingespeisten Sendesignal und einer vom Treibermodul 220 berechneten Ansteuersequenz erzeugt der Modulator 210 das Korrektursignal, welches idealerweise gegenphasig dem Leckage Anteil des Empfangssignals im Addierer 216 überlagert wird.

Diese gegenphasige Überlagerung dient einem Eliminieren eines Anteils des Leckage Anteils des Empfangssignals und damit zur Eliminierung der durch Mischen entstandenen erhöhten Rauschamplitude. Im Gegensatz zu dem in Figur 1 dargestellten Ansatz sind die Mittel zur Rauschunterdrückung in dem in FIG 2 gezeigten Radargerät 200 dazu ausgebildet, den Leckage Anteils des Empfangssignals zu unterdrücken, wodurch die Entstehung eines AM-Rauschanteils im Subträgersignal effektiv minimiert wenn nicht sogar gänzlich verhindert werden kann.

Die Ansteuersequenz für den Quadratur-Modulator 210 wird typischerweise vom Treibermodul, das z.B. als Mikro-Controller ausgebildet ist, berechnet. Diese Berechnung wird typischerweise auf der Basis des Ausgangssignals des Addierers 216 durchgeführt. Die Messanordnung 218 ist daher zur Messung des Ausgangssignals des Addierers 216 ausgebildet und leitet das gemessene Ausgangssignal, das dem Mischer 204 zugeführt wird, an das Treibermodul 220 weiter. Das Treibermodul 220 übernimmt z.B. auch eine Verarbeitung der vom Mischer 204 und vom Datenverarbeitungsmodul 206 erzeugten Signale. Der durch den Addierer 216, die Messanordnung 218, das Treibermodul 220, den D-/A-Wandler 208 und den Modulator 210 realisierte Regelkreis übernimmt auch hier eine Kalibrierfunktion.

Die Messung des Ausgangssignals des Addierers 216 und die damit verbundene Regelung des Quadratur-Modulators 210 kann entweder in einem Dauerbetrieb oder aber in gewissen Kalibrierintervallen vorgenommen werden. Der Quadratur-Modulator 210 kann sowohl die Amplitude als auch die Phase des an den Addierer zu übermittelnden Korrektursignals beliebig einstellen. Durch die gegenphasige Addition des Korrektursignals mit dem Leckage Anteil des Empfangssignals wird das Übersprechen zwischen Sendekanal und Empfangskanal des Radargeräts 200 effektiv minimiert.

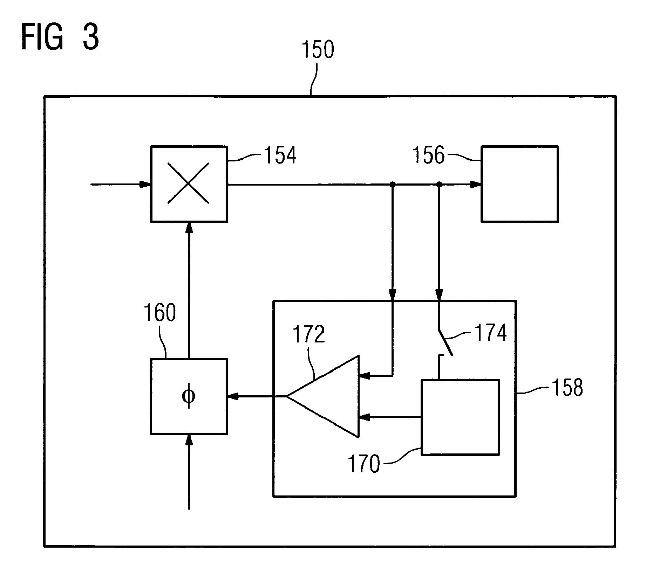

FIG 3 zeigt das Radargerät 150 und dessen Kalibriermodul 158 in einer detaillierteren Darstellung. Das Kalibriermodul 158 verfügt über einen Komparator 172 und ein Referenzmodul 170. Das Referenzmodul 170 dient der Speicherung z.B. eines Sollwerts des DC-Signals des Ausgangssignals des Mischers 154. Dieser Sollwert wird in den Komparator 172 eingekoppelt, der den Sollwert mit einem aktuell erfassten Wert vergleicht. Dieser Vergleich ermöglicht die Regelung der Phase des dem Mischer 154 zuzuführenden Sendesignals mit Hilfe des Phasenschiebers 160.

Ferner verfügt das Kalibriermodul 158 über Speichermittel zur Speicherung vorheriger Messwerte. Somit kann eine mit Hilfe des Phasenschiebers 160 vorgenommene Phasenänderung und deren Auswirkung auf den DC-Anteil mit einer vorherigen Phasenschiebung verglichen werden, um zu bestimmen, ob eine vorgenommene Phasenänderung eine Verringerung oder Erhöhung des DC-Anteiles bewirkte. Entsprechend kann bei einer nächsten Iteration die Phase des an den Mischer 154 eingekoppelten Sendesignals nachgeregelt werden.

Der Schalter 174 ermöglicht das Speichern eines Referenzwerts im Referenzmodul 170. Wird der Schalter geschlossen, so kann ein aufgenommener DC-Wert direkt im Referenzmodul abgespeichert werden, z.B. zu Beginn der Inbetriebnahme des Radargeräts 150. Verändert sich nun z.B. aufgrund von Temperatureffekten die relative Phasenlage zwischen dem Mischer zugeführten Signalen 154, so kann in gewissen Zeitintervallen eine Nachregelung der Phase des Sendesignals durchgeführt werden. So kann z.B. auch ein Alterungseffekt einzelner elektronischer Bauteile effektiv kompensiert werden. Die hier dargestellte Regelschleife wird vorzugsweise iterativ verwendet, d.h. Phasenveränderungen des Phasenschiebers 160 werden inkrementell vorgenommen.

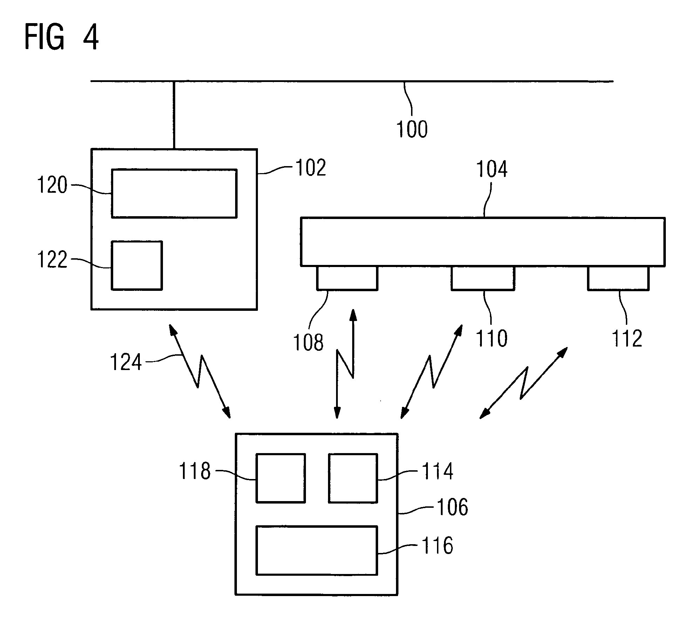

FIG 4 zeigt beispielhaft eine technische Anlage 104 mit technischen Betriebsmitteln für die das erfindungsgemäße Radarsystem eingesetzt werden kann. Die technischen Betriebsmittel sind z.B. Bestandteil einer fertigungs- oder prozesstechnischen Vorrichtung. Zu deren Steuerung sind Automatisierungskomponenten 102 vorhanden, die auf die technischen Betriebsmittel, insbesondere durch Vermittlung von Messwertgebern, Stellungsreglern und verschiedenen anderen sogenannten "Process Instruments" eingreifen. Die Automatisierungskomponenten 102 verfügen beispielhaft über ein Automatisierungsgerät, wie z.B. eine speicherprogrammierbare Steuerung 120, welcher die Steuerung der technischen Betriebsmittel gegebenenfalls in Echtzeit bewirkt.

Die Automatisierungskomponenten 102 sind vorzugsweise an ein Bussystem 100, wie z.B. einen Profibus, angegliedert. Dies ermöglicht eine universelle Vernetzung mehrerer Automatisierungskomponenten 102.

Zur Bedienung und Beobachtung der Automatisierungskomponenten 102 und z.B. von deren ablaufenden Steuerungs-, Diagnose-, Alarmverarbeitungs- und Langzeitbeobachtungsprozessen ist zumindest ein mobiles Bedien- und Beobachtungsgerät 106 vorhanden. Dieses kann z.B. als ein kabelloses Hand-Held Terminal ausgeführt sein und z.B. über ein Display und eine Tastatur 116 verfügen. Weiterhin können Not-, Aus- und Quittungstaste und Schlüsselschalter vorgesehen sein. Das mobile Bedien- und Beobachtungsgerät 106 tauscht in einer berührungslosen Weise Nutzdaten über eine Funkstrecke 124 mit den Automatisierungskomponenten 102 der technischen Anlage 104 aus. Eine Bedienperson, die das Bedien- und Beobachtungsgerät 106 gebraucht, kann sich somit z.B. Messwerte von der technischen Anlage 104 auf dem Display des Bedien- und Beobachtungsgeräts 106 anzeigen lassen, bzw. Steuerbefehle über deren Tastatur 116 eingeben und diese an die Automatisierungskomponenten 102 senden.

Zur Übermittlung von z.B. Messwerten und Steuerbefehlen zwischen dem mobilen Bediengerät 106 und den Automatisierungskomponenten 102 verfügen das mobile Bediengerät 106 sowie die Automatisierungskomponenten 102 über entsprechende Datenübertragungsmodule 118, 122. Diese Datenübertragung wird vorzugsweise mit Hilfe von Radiofrequenz (RF) Signalen realisiert. Hierbei können eine Vielzahl von verschiedenen Datenübertragungsprotokollen, wie z.B. WLAN, IEEE 802.11, Ultra Wide Band (UWB) oder BlueTooth Protokolle zum Einsatz kommen.

Das mobile Bediengerät 106 verfügt zudem über ein Lokalisierungsmodul 114, das zum Senden und zum Empfangen von Radarsignalen ausgebildet ist. Die technische Anlage 104 verfügt zudem über mindestens ein Reflektormodul, welches auch als Transponder oder TAG bezeichnet wird. Vorzugsweise verfügt die Anlage über eine Reihe von Reflektormodulen oder Transpondern 108, 110, 112, die an verschiedenen Referenzpunkten an der technischen Anlage 104 angebracht sind. Die Transponder oder TAGs sind dazu ausgebildet, die vom Lokalisierungsmodul 114 ausgesendeten Radarsignale zu modulieren und zu reflektieren. Die von den Transpondern 108, 110, 112 modulierten und reflektierten Radarsignale können dann von dem Lokalisierungsmodul 114 empfangen und zur Lokalisierung des mobilen Bediengeräts 106 ausgewertet werden. Das mobile Bediengerät 106 ist somit in der Lage, eine Positions- oder Abstandsbestimmung von den Transpondern 108, 110, 112 selbsttätig durchzuführen. Die Transponder 108, 110, 112 müssen hierbei keine Signalauswertung vornehmen. Das erfindungsgemäße, in den Figuren 1 bis 3 dargestellte Radargerät ist hierbei gänzlich im Lokalisierungsmodul 114 implementiert.

Das Lokalisierungsmodul 114 ist vorzugsweise als FMCW-Radar ausgebildet und die einzelnen Transponder 108, 110, 112 sind zur Modulation empfangener Radarsignale und zum Reflektieren daraus resultierender modulierter Radarsignale ausgebildet. Mittels einer von den Transpondern 108, 110, 112 durchgeführten Subträger-Modulation können die von den Transpondern reflektierten Radarsignale selektiv ausgewertet werden. Die Subträger-Modulation ermöglicht somit eine Trennung von Hintergrundsignalen und Signalen, die an den Transpondern reflektiert wurden. Durch eine entsprechende Subträger-Filterung im Lokalisierungsmodul 114 kann somit, mit Hilfe des FMCW-Radars, eine eindeutige Entfernungsmessung für quasistationäre Ziele sogar mit einem Empfänger der lediglich für eine reelle Signalauswerten ausgelegt ist, im Lokalisierungsmodul 114 realisiert werden. Quasistationär bedeutet in diesem Zusammenhang, dass während der Messzeit, die typischerweise im Bereich einiger ms bis einiger 10 ms liegt, sich die Position der Transponder bzw. die Position des Radarsystems nicht verändert.

## Patentansprüche

1. Dauerstrich Radarsystem mit
- einer Sende- und Empfangseinheit (150; 200) die zum Senden eines frequenzmodulierten Sendesignals und zum Empfangen eines Empfangssignals ausgebildet ist,
- einem Mischer (154; 204) zum Mischen des Empfangssignals mit dem Sendesignal zur Erzeugung eines Subträgersignals im Ausgangssignal des Mischers,
- einem Kalibriermodul (158) zur Messung des Ausgangssignals des Mischers und zur Erzeugung eines Phasenkontrollsignals in Abhängigkeit vom gemessenen Ausgangssignal,
- einem mittels des Phasenkontrollsignals regelbaren Phasenschieber (160), der zur Regelung der Phase des dem Mischer zugeführten Sendesignals ausgebildet ist.

2. Radarsystem nach Anspruch 1, wobei der Phasenschieber (160) und das Kalibriermodul (158) zur Rauschunterdrückung des Subträgersignals mittels Einstellung der Phasenlage zwischen einem, dem Mischer zugeführten Sendesignal und dem Empfangssignal ausgebildet sind.

3. Radarsystem nach Anspruch 2, wobei der Phasenschieber (160) und das Kalibriermodul (158) dazu ausgebildet sind, eine Phasenverschiebung im Bereich um 90° zwischen dem Mischer zugeführten Empfangssignal und dem Mischer zugeführten Sendesignal einzustellen.

4. Dauerstrich Radarsystem (150; 200) zur Lokalisierung eines mobilen Bedien- und Beobachtungsgeräts (106) für die Automatisierungskomponenten (102) einer technischen Anlage (104) mit
- einer Sende- und Empfangseinheit, die zum Senden des frequenzmodulierten Sendesignals und zum Empfangen eines Empfangssignals ausgebildet ist,
- einem Mischer (154; 204) zum Mischen des Empfangssignals mit dem Sendesignal zur Erzeugung eines Subträgersignals,
- Mitteln zur Rauschunterdrückung des Subträgersignals.

5. Mobiles Bedien- und Beobachtungsgerät (106) für die Automatisierungskomponenten (102) einer technischen Anlage (104) mit einem Dauerstrich Radarsystem zur Lokalisierung des mobilen Bedien- und Beobachtungsgeräts mit
- einer Sende- und Empfangseinheit (150; 200), die zum Senden eines frequenzmodulierten Sendesignals und zum Empfangen eines Empfangssignals ausgebildet ist,
- einem Mischer (154; 204) zum Mischen des Empfangssignals mit dem Sendesignal zur Erzeugung eines Subträgersignals,
- Mitteln zur Rauschunterdrückung des Subträgersignals.

6. Mobiles Bedien- und Beobachtungsgerät nach Anspruch 5, wobei die Mittel zur Rauschunterdrückung zur Unterdrückung des Amplitudenrauschanteils des Ausgangssignals des Mischers ausgebildet sind.

7. Mobiles Bedien- und Beobachtungsgerät nach Anspruch 5 oder 6, wobei die Sende- und Empfangseinheit (150; 200) über ein Treibermodul (220) verfügt und die Mittel zur Rauschunterdrückung über
- einen Addierer (216) zur Addition des Empfangssignals mit einem Korrektursignal,
- einen mittels Treibermodul regelbaren Modulator (210), der in Antwort auf das Sendesignal zur Abgabe des Korrektursignals an den Addierer ausgebildet ist,
verfügen.

8. Mobiles Bedien- und Beobachtungsgerät nach einem der Ansprüche 5 bis 7, wobei das Treibermodul (220) in Antwort auf die Leistung eines Ausgangsignals des Addierers zur digitalen Signalverarbeitung und zur Regelung der Amplitude und Phase des Korrektursignals mit Hilfe eines Quadraturmodulators (210) ausgebildet ist.

9. Mobiles Bedien- und Beobachtungsgerät nach einem der Ansprüche 5 bis 8, wobei die Mittel zur Rauschunterdrückung über
- ein Kalibriermodul (158) zur Messung des Ausgangssignals des Mischers und zur Erzeugung eines Phasenkontrollsignals in Abhängigkeit vom gemessenen Ausgangssignal,
- einen mittels Phasenkontrollsignal regelbaren Phasenschieber (160), der zur Regelung der Phase des dem Mischer zugeführten Sendesignals ausgebildet ist, verfügen.

10. HMI System mit zumindest einem mobilen Bedien- und Beobachtungsgerät (106) für die Automatisierungskomponenten (102) einer technischen Anlage (104) und mit einem Dauerstrich Radarsystem zur Lokalisierung des mobilen Bedien- und Beobachtungsgeräts, wobei das frequenzmodulierenden Dauerstrich Radarsystem mit
- einer Sende- und Empfangseinheit (150; 200), die zum Senden eines Sendesignals und zum Empfangen eines Empfangssignals ausgebildet ist,
- einem Mischer (154; 204) zum Mischen des Empfangssignals mit dem Sendesignal zur Erzeugung eines Subträgersignals,
- Mitteln zur Rauschunterdrückung des Subträgersignals, ausgestattet ist.
